# EUROPEAN PATENT APPLICATION

(11) **EP 3 136 112 A1**
(43) Date of publication of application: **01.03.2017**
(21) Application number: 16185567.1
(22) Date of filing: 24.08.2016
(51) Int. Cl.: G01P 3/487, G01P 3/489, G01D 5/244, G01P 13/04, G01P 3/488

(54) **ROTATION SENSOR**

(30) Priority: 28.08.2015 JP 2015169505
(71) Applicant: AISIN SEIKI KABUSHIKI KAISHA, Kariya-shi Aichi-ken 448-8650 (JP)
(72) Inventor: KAWASAKI, Koji, Kariya-shi, Aichi-ken, 448-8650 (JP); ADACHI, Kazuhiro, Kariya-shi, Aichi-ken, 448-8650 (JP); HARA, Takashi, Kariya-shi, Aichi-ken, 448-8650 (JP)
(74) Representative: Winter, Brandl, Fürniss, Hübner, Röss, Kaiser, Polte - Partnerschaft mbB

(57) **Abstract**

A rotation sensor (1) includes: a first detection element (11) disposed to oppose an outer circumferential surface (103) of a rotating body (100) or one end surface (104) in the shaft direction of the rotating body different from that on a shaft line of the rotating body, and detecting magnetic flux density; a storage portion (13) storing the detection result of the first detection element; a second detection element (12) disposed to be separated from the first detection element only by a predetermined distance, and detecting the magnetic flux density; a determination threshold value setting portion (14) setting a determination threshold value (TH1, TH2, TH3, TH4, TH5) based on a difference between maximum and minimum values in the detection result; and a signal output portion (15) outputting a signal indicating the rotation of the rotating body when the detection result of the second detection element reaches the determination threshold value.

## Description

### TECHNICAL FIELD

This disclosure relates to a rotation sensor which detects a rotational speed of a rotating body.

### BACKGROUND DISCUSSION

In the related art, a rotation sensor has been used in detecting a rotation angle or a rotational speed of a rotating body. In the rotation sensor, there is a sensor which detects the rotation angle or the rotational speed of the rotating body by detecting magnetic flux density or strength of a magnetic field caused by a magnet disposed so that magnetic poles different from each other are adjacent to each other along the circumferential direction of the rotating body. As a technology in which the rotation sensor is used, there are technologies described in JP 7-183591A (Reference 1) and JP 2002-541485T (Reference 2) illustrating the following references.

A sensor signal processing device described in Reference 1 performs predetermined correction with respect to an output signal of a magnetism detection sensor which converts a sensed magnetism into an electric signal and outputs the signal, and obtains a peak value and a bottom value of the output signal after the correction. A threshold value from the peak value and the bottom value is set, and a binarized signal is output by a magnitude relationship between the threshold value and the output signal.

A bearing element described in Reference 2 is configured to be provided with annular means which generates magnetic pulses and a detection element for detecting the pulses. A plurality of detection elements are disposed in an array shape with respect to a multipolar encoder which is a detection target, and output more output signals than the number of magnetic poles of the encoder by multiplication processing based on a detection signal.

With respect to the number of poles of a detection target (encoder), output of many output signals to a calculation processing device makes rotation detection with high accuracy possible. However, in the technology described in Reference 1, in a case where there is unevenness in strength of magnetic force of the encoder which is the detection target, since the output signal does not reach the set threshold value in some cases, pulse omission occurs, or even when the output signal reaches the set threshold value, the output pulse is not obtained at an equivalent interval, and thus, there is a possibility that the rotation detection cannot be performed with high accuracy. In addition, in the technology described in Reference 2, since the plurality of detection elements are disposed in an array shape, an increase in cost is caused.

### SUMMARY

Thus, a need exists for a rotation sensor which performs the rotation detection with high accuracy and can be realized at low cost, is required.

A rotation sensor according to an aspect of this disclosure includes: a first detection element which is disposed to oppose an outer circumferential surface of a rotating body or one end surface in a shaft direction of the rotating body that is different from that on a shaft line of the rotating body, and detects magnetic flux density; a storage portion which stores the detection result of the first detection element obtained in accordance with rotation of the rotating body; a second detection element which is disposed to be separated from the first detection element only by a predetermined distance on a downstream side in the rotational direction of the rotating body from the first detection element, and detects the magnetic flux density; a determination threshold value setting portion which sets a determination threshold value based on a difference between a maximum value and a minimum value included in the detection result of the first detection element stored in the storage portion; and a signal output portion which outputs a signal that indicates the rotation of the rotating body when the detection result of the second detection element reaches the determination threshold value.

In this configuration, since the determination threshold value setting portion sets the determination threshold value using the detection result of the first detection element, and the signal output portion outputs the signal that indicates the rotation of the rotating body using the determination threshold value and the detection result of the second detection element, the detection result of the second detection element can reliably cross over (intersect) the determination threshold value. Therefore, it is possible to prevent pulse omission. In addition, since it is possible to set the determination threshold value which is appropriate for the detection result of the second detection element, it is possible to make the output of the signal output portion have equivalent interval. Therefore, since it is possible to increase sensitivity of the rotation detection, it is possible to perform the rotation detection with high accuracy. Furthermore, compared to a case where the detection elements are aligned in an array shape, since the number of detection elements to be used may be small, it is possible to realize the rotation sensor at low cost.

It is preferable that a plurality of magnets are disposed to make magnetic poles different from each other adjacent to each other along the circumferential direction of the rotating body, and an interval between the first detection element and the second detection element is equal to or greater than the length in the circumferential direction of one magnet among the plurality of magnets disposed along the circumferential direction.

In this configuration, it is possible to obtain the detection result to be obtained by the second detection element in advance by the first detection element before the detection result of the second detection element is obtained. Therefore, it is possible to appropriately set the determination threshold value which is appropriate for the detection result of the second detection element.

It is preferable that the determination threshold value setting portion sets the determination threshold value using the detection result before a predetermined time from a current point of time among the detection results of the first detection element stored in the storage portion.

In this configuration, since the determination threshold value is set by using the detection result before the predetermined time from the current point of time, for example, even in a case where the rotating body is installed in an environment in which the temperature of the magnet changes, it is possible to set the determination threshold value at magnetic flux density which corresponds to the environment temperature at this point in time. Therefore, it is possible to detect the rotational speed of the rotating body with high accuracy.

It is preferable that the storage portion also stores the detection result of the second detection element, and the rotation sensor further includes a prediction portion which predicts at least one of the maximum value and the minimum value after a predetermined time from the current point of time of the detection result of the second detection element, using the detection result before the predetermined time from the current point of time of the first detection element and the second detection element, among the detection results of the first detection element and the second detection element stored in the storage portion.

In this configuration, by the result of the prediction portion, it is possible to easily specify whether or not the rotational direction of the rotating body has changed with respect to the rotational direction so far.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram schematically illustrating a configuration of a rotation sensor;
Fig. 2 is a disposition example of a first detection element and a second detection element;
Fig. 3 is a view illustrating an output result of the detection elements and an output of a signal output portion;
Fig. 4 is a view illustrating prediction of the detection result;
Fig. 5 is a view illustrating an output of the rotation sensor which corresponds to the rotational direction;
Fig. 6 is a view illustrating an output of the rotation sensor according to another embodiment;
Fig. 7 is a view illustrating disposition of the detection elements of the rotation sensor according to another embodiment;
Fig. 8 is a view illustrating an output of the rotation sensor according to another embodiment;
Fig. 9 is a partial configuration view of the rotation sensor according to another embodiment; and
Fig. 10 is a partial configuration view of the rotation sensor according to another embodiment.

### DETAILED DESCRIPTION

A rotation sensor according to the disclosure is configured to be capable of detecting a rotational speed with high accuracy. Hereinafter, a rotation sensor 1 of the embodiment will be described.

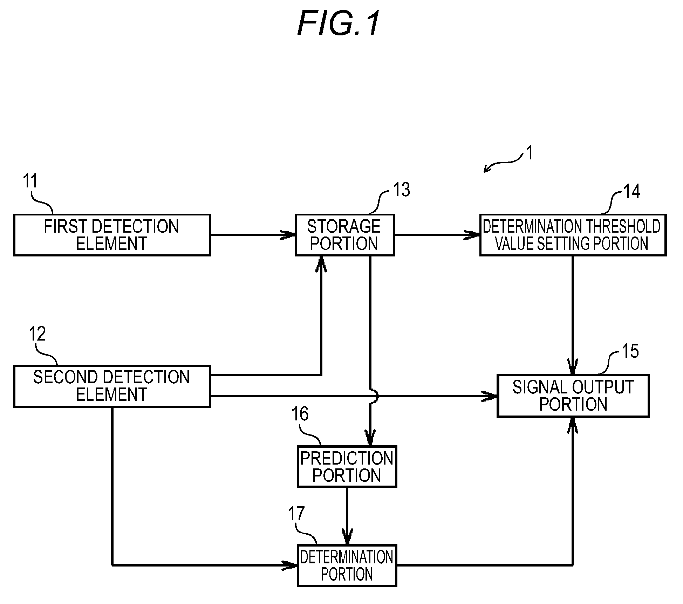

Fig. 1 is a block diagram schematically illustrating the rotation sensor 1. As illustrated in Fig. 1, the rotation sensor 1 is provided with various functional portions, such as a first detection element 11, a second detection element 12, a storage portion 13, a determination threshold value setting portion 14, a signal output portion 15, a prediction portion 16, and a determination portion 17. In particular, in order to perform a series of processing according to detection of the rotational speed, the storage portion 13, the determination threshold value setting portion 14, the signal output portion 15, the prediction portion 16, and the determination portion 17 are constructed by hardware or software, or by both hardware and software, considering CPU as a core member.

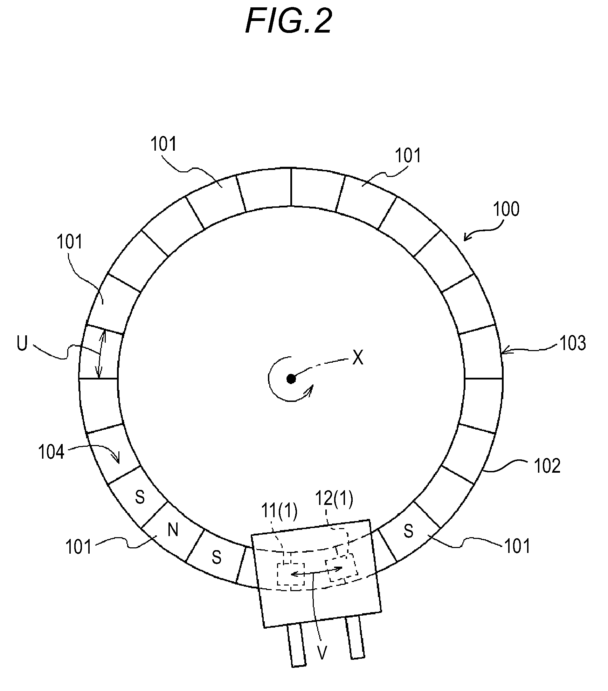

The rotation sensor 1 is used in detecting the rotational speed of a rotating body 100 which is a detection target. In Fig. 2, the rotating body 100 is illustrated. In the embodiment, as illustrated in Fig. 2, in the rotating body 100, a plurality of magnets 101 are provided so that magnetic poles different from each other are adjacent to each other along the circumferential direction of the rotating body 100. Accordingly, in accordance with the rotation of the rotating body 100 using a shaft center X as a rotating shaft, a magnetic force line which is caused by the magnet 101 and generated in the periphery of the rotating body 100 changes. The first detection element 11 is disposed to be capable of detecting the magnetic flux density and the strength of a magnetic field based on the magnetic force line that changes in accordance with the rotation of the rotating body 100 in this manner.

In the embodiment, the magnet 101 is provided in an outer edge portion 102 of the rotating body 100. In order to make it easy to detect the above-described magnetic flux density and the strength of the magnetic field of the magnet 101, the first detection element 11 is disposed to oppose the magnet 101 on an outer circumferential surface 103 of the rotating body 100, or on one end surface 104 in the shaft direction of the rotating body 100 which is different from that on the shaft line of the rotating body 100. In a case where the first detection element 11 is provided to oppose the magnet 101 on the outer circumferential surface 103 of the rotating body 100, the first detection element 11 detects the magnetic flux density and the strength of the magnetic field based on the magnetic force line of the magnet 101 generated on the outer side in the radial direction of the rotating body 100. Meanwhile, in a case where the first detection element 11 is provided to oppose the magnet 101 on the one end surface 104 in the shaft direction of the rotating body 100 which is different from that on the shaft line of the rotating body 100, the first detection element 11 detects the magnetic flux density and the strength of the magnetic field based on the magnetic force line of the magnet 101 generated on one side in the shaft direction of the rotating body 100. In the example of Fig. 2, the first detection element 11 is provided to oppose the one end surface 104 in the shaft direction of the rotating body 100.

Similar to the first detection element 11, the second detection element 12 is also disposed to be capable of detecting the magnetic flux density and the strength of the magnetic field based on the magnetic force line which changes in accordance with the rotation of the rotating body 100. The second detection element 12 is disposed to be separated from the first detection element 11 only by a predetermined distance on the downstream side in the rotational direction of the rotating body 100 from the first detection element 11. The downstream side in the rotational direction of the rotating body 100 than the first detection element 11 is a side turned counterclockwise from the first detection element 11 in a case where the rotating body 100 rotates counterclockwise using the shaft center X as the rotating shaft as illustrated in Fig. 2, and is a side turned clockwise from the first detection element 11 in a case where the rotating body 100 rotates clockwise using the shaft center X as the rotating shaft. Therefore, the first detection element 11 and the second detection element 12 are used as illustrated in Fig. 2 in a case where the rotating body 100 turns counterclockwise, but the detection element which is disposed at a position having a reference numeral 12 in Fig. 2 is used as the first detection element 11 in a case where the rotating body 100 turns clockwise, and the detection element which is disposed at a position having a reference numeral 11 is used as the second detection element 12.

In addition, as described above, in the embodiment, the first detection element 11 is provided to oppose the one end surface 104 in the shaft direction of the rotating body 100, but the second detection element 12 is also provided to oppose the one end surface 104 in the shaft direction of the rotating body 100. For example, in a case where the first detection element 11 is provided to oppose the magnet 101 on the outer circumferential surface 103 of the rotating body 100, the second detection element 12 may also be provided to oppose the magnet 101 on the outer circumferential surface 103 of the rotating body 100.

In order to reduce a detection error included in the detection result of the magnetic flux density and the strength of the magnetic field based on the magnetic force line of the magnet 101, the first detection element 11 and the second detection element 12 may be disposed to approach each other, but in order to appropriately perform the setting of a determination threshold value which will be described later, in the embodiment, an interval (distance along the circumferential direction of the rotating body 100) between the first detection element 11 and the second detection element 12 becomes equal to or greater than the length in the circumferential direction of one magnet 101 among the plurality of magnets 101 disposed along the circumferential direction of the rotating body 100. As described above, in the rotating body 100, the plurality of magnets 101 are disposed, but each magnet 101 having the length in the circumferential direction as equivalent as possible may be used. Therefore, as illustrated in Fig. 2, when the length in the circumferential direction of one magnet 101 is U and the interval between the first detection element 11 and the second detection element 12 is V, a relationship of U ≤ V is established, and preferably, V is configured to be as small as possible.

The first detection element 11 and the second detection element 12 may use a known hall IC or a magnetoresistance effect element (MR element). As illustrated in Fig. 2, the first detection element 11 and the second detection element 12 are configured to be integrated on the inside of one mold portion that configures an electronic component (configured of one package).

In the embodiment, the detection result of the first detection element 11 and the second detection element 12 obtained in accordance with the rotation of the rotating body 100, is stored in the storage portion 13. At this time, in the storage portion 13, the detection result may be stored in association with a time stamp which regulates the time when the detection result of the first detection element 11 and the detection result of the second detection element 12 are obtained. In addition, while at least the rotating body 100 rotates only by a rotation angle which corresponds to the above-described interval V, each detection result may be stored.

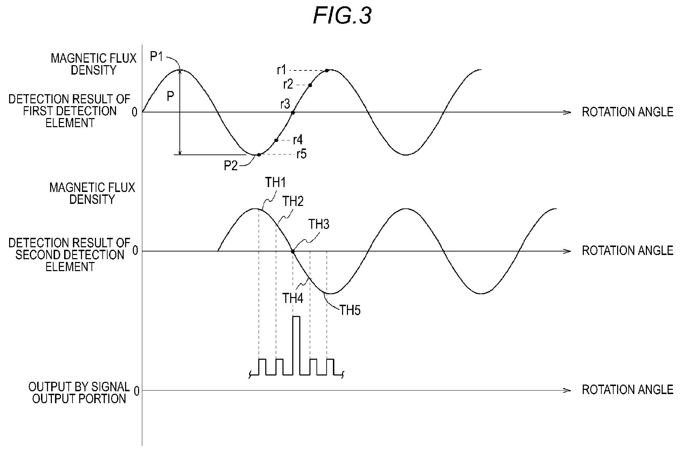

In Fig. 3, the detection result of the first detection element 11 and the detection result of the second detection element 12 which are stored in the storage portion 13, are illustrated as an example. As illustrated in Fig. 3, each detection result of the first detection element 11 and the second detection element 12 become a sine wave. As described above, by disposing the first detection element 11 and the second detection element 12, the detection result of the first detection element 11 and the detection result of the second detection element 12 respectively have a phase difference which corresponds to the above-described V. Specifically, the detection result of the second detection element 12 becomes delayed by 1/2 cycle with respect to the detection result of the first detection element 11.

Returning to Fig. 1, the determination threshold value setting portion 14 sets the determination threshold value based on a difference between the maximum value and the minimum value included in the detection result of the first detection element 11 stored in the storage portion 13. In the embodiment, the detection result of the first detection element 11 progresses by 1/2 cycle from the detection result of the second detection element 12. Here, the determination threshold value setting portion 14 may set the determination threshold value using the 1/2 cycle of the detection result before a predetermined time from the current point of time, among the detection results of the first detection element 11 stored in the storage portion 13.

Here, when the rotation sensor 1 is configured so that the detection result of the first detection element 11 and the detection result of the second detection element 12 are obtained as a sine wave as described above, the determination threshold value setting portion 14 detects the maximum value and the minimum value of the detection result of the first detection element 11, and divides the interval (corresponding to an amplitude value) between the maximum value and the minimum value ("5" in the embodiment). The division sets a plurality of predetermined ratios with respect to the amplitude value which is suitable for the number divided in advance, a plurality of values may be obtained using the ratios and the detection result, and the value becomes the determination threshold value. Here, it is preferable that the determination threshold value setting portion 14 is provided with a peak-hold portion which obtains the maximum value of the detection result of the first detection element 11, and a bottom-hold portion which obtains the minimum value.

In the example of Fig. 3, the maximum value in the detection result of the first detection element 11 by the peak-hold portion, is detected as P1, and the minimum value in the detection result of the first detection element 11 by the bottom-hold portion, is detected as P2. Next, the determination threshold value setting portion 14 calculates the interval P between the maximum value P1 and the minimum value P2. Here, the above-described plurality of ratios with respect to the amplitude value is set in advance, and the ratios are respectively, r1%, r2%, r3%, r4%, and r5%.

In the embodiment, the determination threshold value setting portion 14 sets a total of 5 determination threshold values TH1, TH2, TH3, TH4, and TH5. Specifically, TH1 is calculated by P x r1% (for example, r1 = 49.4), TH2 is calculated by P x r2% (for example, r2 = 32.3), TH3 is calculated by P x r3% (for example, r3 = 0), TH4 is calculated by P x r4% (for example, r4 = -32.3), and TH5 is calculated by P x r5% (for example, r5 = -49.4). Here, as in this embodiment, in a case where the total of 5 determination threshold values TH1, TH2, TH3, TH4, and TH5 are set using the value (in the example of Fig. 3, a point at which "detection result of the first detection element" becomes 0) of the center of the interval P as a reference, r3 becomes 0, and r4 and r5 become a negative value. In this manner, the determination threshold value set by the determination threshold value setting portion 14 is transmitted to the signal output portion 15 which will be described later.

Returning to Fig. 1, the signal output portion 15 outputs a signal which indicates the rotation of the rotating body 100 when the detection result of the second detection element 12 reaches the determination threshold value set by the determination threshold value setting portion 14. In other words, the signal output portion 15 outputs a pulse signal made of a pulse width set in advance when the detection result which is smaller than the determination threshold value set by the determination threshold value setting portion 14 and transmitted from the second detection element 12 becomes greater than the determination threshold value set by the determination threshold value setting portion 14, by comparing the detection result transmitted from the second detection element 12 with the determination threshold value set by the determination threshold value setting portion 14. In addition, the signal output portion 15 outputs the pulse signal made of the pulse width set in advance when the detection result which is greater than the determination threshold value set by the determination threshold value setting portion 14 and transmitted from the second detection element 12 becomes smaller than the determination threshold value set by the determination threshold value setting portion 14. At this time, when the detection result reaches the determination threshold value which corresponds to the time of the center, the signal output portion 15 may output the pulse signal having a higher peak value than that of other pulse signals.

In the example of Fig. 3, in a case where the detection result of the second detection element 12 reaches the determination threshold values TH1, TH2, TH3, TH4, and TH5, the signal output portion 15 outputs a pulse signal, and in particular, the signal output portion 15 outputs the pulse signal having a higher peak value than that of other pulse signals when the detection result of the second detection element 12 reaches TH3. By repeating this series of processing while the rotating body 100 rotates, it is possible to appropriately detect the rotational speed of the rotating body 100.

Here, in a case where magnetic pole strengths of the rotating body 100 are not similar, the peak value (the amplitude value of the sine wave) of each detection result of the first detection element 11 and the second detection element 12 does not become constant in Fig. 3. Even in this case, by the above-described configuration, since the rotation sensor 1 can set the determination threshold value which corresponds to the magnetic pole strength from the detection result of the first detection element 11, it is possible to prevent the signal (detection result of the second detection element 12) which is output in accordance with the rotation of the rotating body 100 from not being output (above-described "pulse omission").

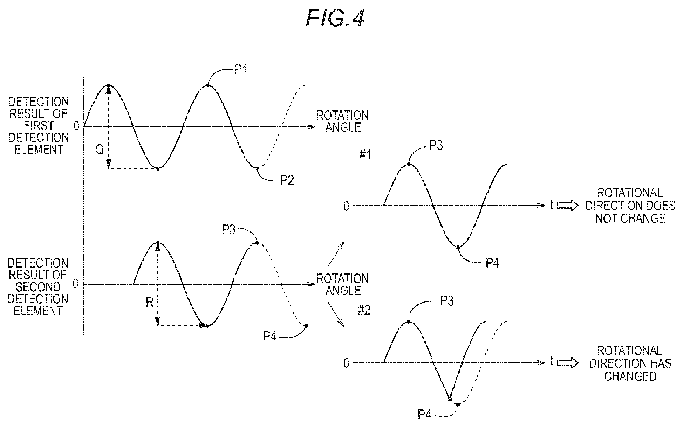

Returning to Fig. 1, the prediction portion 16 predicts at least one of the maximum value and the minimum value after a predetermined time from the current point of time of the detection result of the second detection element 12, using the detection result before a predetermined time from the current point of time of the first detection element 11 and the second detection element 12, among the detection results of the first detection element 11 and the second detection element 12 stored in the storage portion 13. The detection result of the second detection element 12 is obtained being delayed from the detection result of the first detection element 11 in accordance with the distance between the first detection element 11 and the second detection element 12. In a state where the rotating body 100 rotates, the prediction portion 16 calculates a peak-to-peak value of the detection result of the first detection element 11 and a peak-to-peak value of the detection result of the second detection element 12, and calculates the ratio (amplitude ratio) thereof. In the embodiment, as illustrated in Fig. 4, the peak-to-peak value of the detection result of the first detection element 11 is Q, and the peak-to-peak value of the detection result of the second detection element 12 is R. A ratio between the Q and R becomes a ratio of sensitivity of the first detection element 11 and the second detection element 12.

As illustrated in Fig. 4, when the detection result of the first detection element 11 is obtained, the prediction portion 16 detects the maximum value and the minimum value in 1/2 cycle, and calculates the above-described ratio of sensitivity of the first detection element 11 and the second detection element 12. In addition, as the detection result of the first detection element 11, the P1 is detected as the maximum value, and the P2 is detected as the minimum value. At this time, when P3 is detected as the detection result of the second detection element 12, the prediction portion 16 predicts the next (after the predetermined time) peak value (minimum value P4) obtained as the detection result of the second detection element 12 by the P2 and the ratio between the Q and R. Specifically, the calculation is performed by P4 = P2 x R/Q. The prediction result by the prediction portion 16 is transmitted to the determination portion 17.

The determination portion 17 determines whether or not the rotational direction of the rotating body 100 has changed so far based on the detection result of the second detection element 12 and the prediction result by the prediction portion 16. Here, in #1 and #2 of Fig. 4, a temporal change in the detection result of the second detection element 12 is illustrated. The determination portion 17 determines that the rotational direction of the rotating body 100 has not changed so far when the detection result of the second detection element 12 has been reduced similar to the detection result so far and reaches the prediction result (P4) as illustrated in #1 of Fig. 4. Meanwhile, the determination portion 17 determines that the rotational direction of the rotating body 100 has changed so far in a case where the detection result of the second detection element 12 which has been reduced so far increases before reaching the prediction result (P4) as illustrated in #2 of Fig. 4.

It is needless to say that the determination portion 17 also can determine the rotational direction using the maximum value. In other words, the determination portion 17 determines that the rotational direction of the rotating body 100 has not changed when the detection result of the second detection element 12 increases and reaches the prediction result by the prediction portion 16 similar to the detection result so far. Meanwhile, in a case where the detection result of the second detection element 12 that has increased so far is reduced before reaching the prediction result by the prediction portion 16, the determination portion 17 determines that the rotational direction of the rotating body 100 has changed so far. In this manner, by predicting the detection result, it is also possible to detect the rotational direction of the rotating body 100.

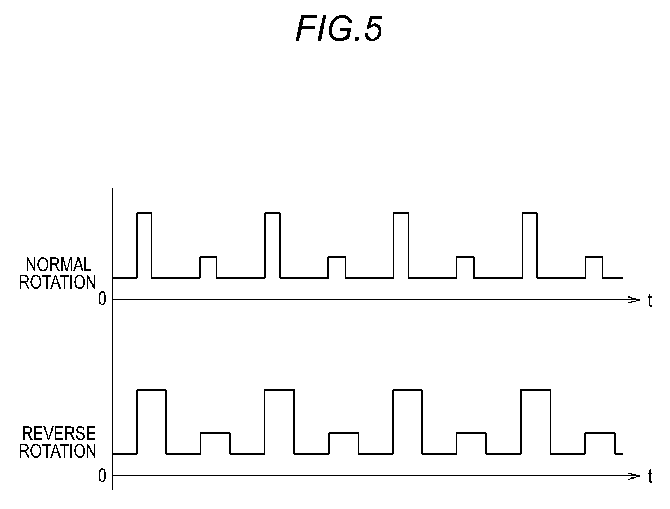

Here, it is preferable that the detection result of the determination portion 17 is transmitted to the signal output portion 15. The signal output portion 15 outputs the signal which indicates the rotation of the rotating body 100 when the detection result of the second detection element 12 reaches the determined threshold value as described above, but the width of the signal may change in accordance with the detection result of the determination portion 17. In other words, as illustrated in Fig. 5, when the rotation is performed in one direction (for example, normal rotation), and when the rotation is performed in the other direction (for example, reverse direction), the output time (pulse width) of the signal may change. Accordingly, the device which uses the output of the signal output portion 15 can also recognize the rotational direction of the rotating body 100.

### Other Embodiments

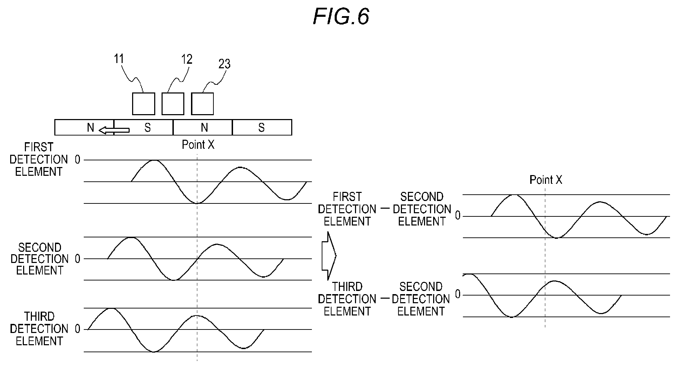

In the above-described embodiment, it is described that the rotational speed is detected using each detection result of the first detection element 11 and the second detection element 12, but there may be a case where there is a lot of noise of an external magnetic field or the like as an environment using the rotation sensor 1. In this case, as illustrated in Fig. 6, using three detection elements (first detection element 11, second detection element 12, third detection element 23), a differential magnetic flux signal made of a difference between the detection result of the first detection element 11 and the detection result of the second detection element 12, and a difference between the detection result of the third detection element 23 and the detection result of the second detection element 12, may be calculated. In this case, since the differential magnetic flux signal of the detection result of the third detection element 23 and the detection result of the second detection element 12 becomes a signal which is obtained as the differential magnetic flux signal of the detection result of the first detection element 11 and the detection result of the second detection element 12 in the future, similar to the above-described embodiment, by setting the determination threshold value, it becomes possible to appropriately detect the rotational speed of the rotating body 100. It is needless to say that it is also possible to predict the peak value of the differential magnetic flux signal by the prediction portion 16.

In addition, in the rotation sensor 1, in a case of being configured using the three detection elements (first detection element 11, second detection element 12, third detection element 23), by detecting a phase difference of the difference between the detection result of the first detection element 11 and the detection result of the second detection element 12, and the difference between the detection result of the third detection element 23 and the detection result of the second detection element 12, it is possible to detect the rotational direction of the rotating body 100. In a case a configuration in which the determination threshold value is set by the difference between the detection result of the third detection element 23 and the detection result of the second detection element 12 and the rotational speed of the rotating body 100 is detected by the difference between the detection result of the first detection element 11 and the detection result of the second detection element 12, before the rotational direction changes, is employed, a configuration in which the determination threshold value is set by the difference between the detection result of the first detection element 11 and the detection result of the second detection element 12, and the rotational speed of the rotating body 100 is detected by the difference between the detection result of the third detection element 23 and the detection result of the second detection element 12, after the rotational direction changes, is also possible.

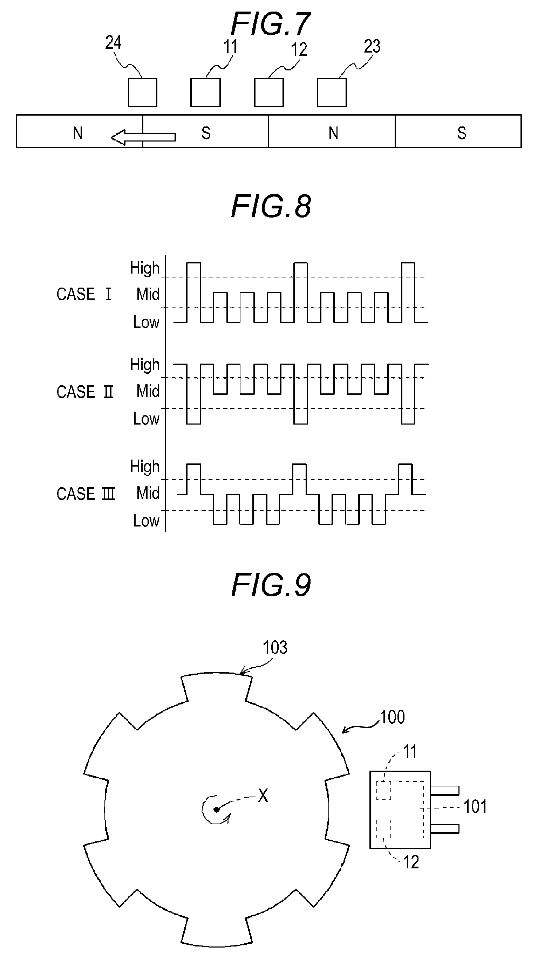

Otherwise, as illustrated in Fig. 7, by providing a fourth detection element 24, a configuration in which the determination threshold value is set by the difference between the detection result of the third detection element 23 and the detection result of the second detection element 12, and the rotational speed of the rotating body 100 is detected by the difference between the detection result of the fourth detection element 24 and the detection result of the first detection element 11, before the rotational direction further changes, and a configuration in which the determination threshold value is set by the difference between the detection result of the fourth detection element 24 and the detection result of the first detection element 11, and the rotational speed of the rotating body 100 is detected by the difference between the detection result of the third detection element 23 and the detection result of the second detection element 12, after the rotational direction changes, are also possible.

In the above-described embodiment, it is described that the signal output portion 15 outputs the signal having a higher peak value than that of other signals when the detection result of the second detection element 12 becomes 0. At this time, as illustrated in Fig. 3, the peak value of each signal changes using a LOW level as a reference (refer to case I of Fig. 8). For example, as illustrated in case II of Fig. 8, a configuration in which the peak value of each signal changes using a HIGH level as a reference is also possible, and as illustrated in case III, a configuration in which one of each signal is output to the HIGH level side using a MID level as a reference, and the other one is output to the LOW level side, is also possible.

In the above-described embodiment, a configuration in which the interval between the first detection element 11 and the second detection element 12 is equal to or greater than the length in the circumferential direction of one magnet 101 among the plurality of magnets 101 disposed along the circumferential direction, is described, but a configuration in which the interval between the first detection element 11 and the second detection element 12 is less than the length in the circumferential direction of one magnet 101 among the plurality of magnets 101 disposed along the circumferential direction, is also possible. In this case, the determination threshold value can be appropriately set by using the detection result at least 1/2 cycle or more before from the current point of time.

In the above-described embodiment, it is described that the determination threshold value setting portion 14 sets the determination threshold value by using the detection result before the predetermined time from the current point of time among the detection results of the first detection element 11 stored in the storage portion 13, but, for example, a configuration in which the position of the magnet 101 at which the detection result is obtained is also stored when storing the detection result of the first detection element 11 in the storage portion 13, and when the determination threshold value setting portion 14 sets the determination threshold value, the detection result which is suitable for the corresponding magnet 101 is used, is also possible.

In the above-described embodiment, it is described that the prediction portion 16 predicts at least one of the maximum value and the minimum value after the predetermined time from the current point of time of the detection result of the second detection element 12 by using the detection result before the predetermined time from the current point of time of the first detection element 11 and the second detection element 12, but a configuration in which the prediction portion 16 is not provided, is also possible.

In the above-described embodiment, it is described that the first detection element 11 is disposed to oppose one end surface in the shaft direction of the rotating body 100 different from that on the shaft line of the rotating body 100, and detects the magnetic flux density, but a configuration in which the first detection element 11 is disposed to oppose the outer circumferential surface 103 of the rotating body 100, is also possible.

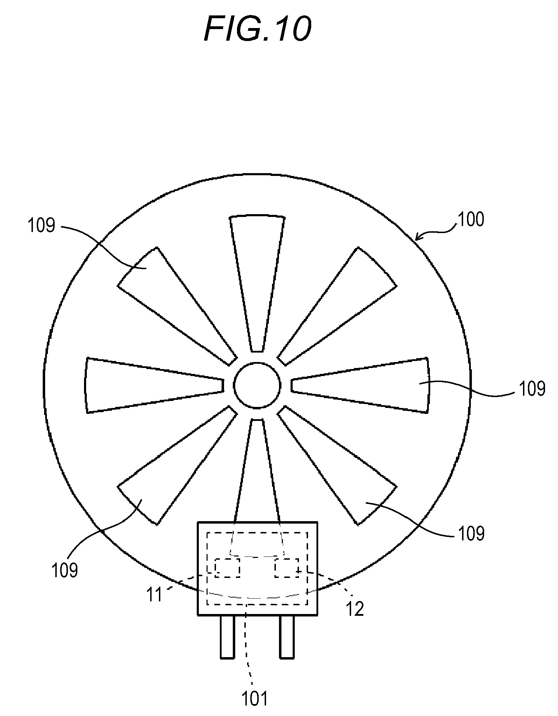

In addition, in the above-described embodiment, a case where the magnet 101 is provided in the rotating body 100 is described as an example, but as illustrated in Fig. 9, together with the first detection element 11 and the second detection element 12, the magnet 101 also can be provided to oppose the rotating body 100. In this case, a gear surface is configured on the outer circumferential surface 103 of the rotating body 100 made of a magnetic material, and the first detection element 11 and the second detection element 12 may be provided to oppose the gear surface. In this configuration, as the magnetic flux density changes by a magnetic flux of the magnet 101 which is detected by the first detection element 11 and the second detection element 12 in accordance with the rotation of the rotating body 100, it is also possible to detect the rotation of the rotating body 100. Otherwise, in a case where the first detection element 11 is disposed to oppose the one end surface in the shaft direction of the rotating body 100 different from that on the shaft line of the rotating body 100, as illustrated in Fig. 10, a configuration in which a plurality of opening portions 109 which penetrate in the shaft direction of the rotating body 100 are provided in the rotating body 100 made of a magnetic material, the magnetic flux density of the magnet 101 provided to oppose the rotating body 100 changes by the opening portion 109, and the rotation of the rotating body 100 is detected, is also possible.

The disclosure can be used in a rotation sensor which detects the rotational speed of the rotating body.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A rotation sensor (1) comprising:
a first detection element (11) which is disposed to oppose an outer circumferential surface (103) of a rotating body (100) or one end surface (104) in the shaft direction of the rotating body that is different from that on a shaft line of the rotating body, and detects magnetic flux density;
a storage portion (13) which stores the detection result of the first detection element obtained in accordance with rotation of the rotating body;
a second detection element (12) which is disposed to be separated from the first detection element only by a predetermined distance on a downstream side in the rotational direction of the rotating body from the first detection element, and detects the magnetic flux density;
a determination threshold value setting portion (14) which sets a determination threshold value (TH1, TH2, TH3, TH4, TH5) based on a difference between a maximum value and a minimum value included in the detection result of the first detection element stored in the storage portion; and
a signal output portion (15) which outputs a signal that indicates the rotation of the rotating body when the detection result of the second detection element reaches the determination threshold value.

2. The rotation sensor according to claim 1,
wherein a plurality of magnets (101) are disposed to make magnetic poles different from each other adjacent to each other along the circumferential direction of the rotating body, and
wherein an interval between the first detection element and the second detection element is equal to or greater than the length in the circumferential direction of one magnet among the plurality of magnets disposed along the circumferential direction.

3. The rotation sensor according to claim 1 or 2,
wherein the determination threshold value setting portion sets the determination threshold value using the detection result before a predetermined time from a current point of time among the detection results of the first detection element stored in the storage portion.

4. The rotation sensor according to any one of claims 1 to 3,
wherein the storage portion also stores the detection result of the second detection element, and
wherein the rotation sensor further comprises a prediction portion (16) which predicts at least one of the maximum value and the minimum value after a predetermined time from the current point of time of the detection result of the second detection element, using the detection result before the predetermined time from the current point of time of the first detection element and the second detection element, among the detection results of the first detection element and the second detection element stored in the storage portion.
